# EUROPEAN PATENT SPECIFICATION

(11) **EP 2 623 345 B1**
(45) Date of publication and mention of the grant of the patent: **04.04.2018**
(21) Application number: 12153625.4
(22) Date of filing: 02.02.2012
(51) Int. Cl.: B60D 1/52, B60D 1/54

(54) **Towing hook arrangement and a method for displacing a towing hook of a towing hook arrangement**
Zughakenanordnung und Verfahren zum Verschieben eines Zughakens einer Zughakenanordnung
Agencement de crochet de remorquage et procédé de déplacement d'un crochet de remorquage d'un agencement de crochet de remorquage

(43) Date of publication of application: 07.08.2013
(73) Proprietor: Brink Towing Systems B.V., 7951 CX Staphorst (NL)
(72) Inventor: Eising, Frederik, Jacob, 7951 CX Staphorst (NL); Borgonje, Christian Frans, 7951 CX Staphorst (NL)
(74) Representative: Valea AB

(56) References cited:
- EP-A1- 1 400 379
- EP-A1- 1 557 299
- EP-A1- 2 412 550
- WO-A1-2005/110781
- DE-A1- 10 243 044

## Description

### TECHNICAL FIELD

The present invention relates to a towing hook arrangement for a vehicle and a method for displacing a towing hook of a towing hook arrangement. The towing hook arrangement comprises a towing hook which can be displaced between a towing position and a retracted position.

### BACKGROUND OF THE INVENTION

Towing hooks for towing e.g. trailers are commonly used today. In most cases a towing hook is mounted on the vehicle during the assembly process of the vehicle, although after sales mounting, e.g. by an authorized garage, is possible. For esthetical and practical reasons it may be desirable to have a towing hook which can be displaced between a towing position and a retracted position. Generally such towing hooks are referred to as retractable towing hooks.

There are several considerations when constructing a towing hook of the retractable kind. The available space in which a towing hook arrangement can be mounted on a vehicle varies between different manufacturers and models. The rotation path of the towing hook can further be very space consuming and imparts restrictions on the configuration of the towing hook arrangement. The towing hook should further, when in the retracted position, not be visible or at least not be clearly visible so as not to affect the aesthetic appearance of the vehicle. It is also important that the towing hook can be retracted to a position in which it is subjected to no or low risk of being damaged by the ground on which the vehicle rests or travels over, or by loose objects from the ground such as dirt or rubble.

An example of a retractable towing hook is disclosed in the European patent No. EP 1,894,752 B1. The towing hook in the mentioned patent projects from a bearing housing which forms the socket portion of a ball and socket joint. The towing hook has a ball portion forming the corresponding ball of the ball and socket joint. The ball and socket joint enables the towing hook to be displaced between a towing position, also referred to as the operative position, and a retracted position, also referred to as the inoperative position. A cam track which cooperates with a gear arranged on a motor-driven axle effects displacement of the towing hook between the towing position and the retracted position. The cam track is arranged in a groove on the ball portion of the towing hook and defines a predetermined rotation path for the towing hook along which the towing hook can rotate between the towing position and the retracted position. A second rotating axle operates a lock to prevent the towing hook from rotating when in the towing position.

### SUMMARY

All of the above mentioned considerations when constructing retractable towing hooks, although being important, can never be weighed against the safety of third persons, e.g. pedestrians walking at the side of the road. Should a trailer accidentally become disconnected from a towing hook when being towed by a vehicle, the consequences can simply be devastating. A towing hook arrangement which is safe, or which permits safe solutions, is thus not only desirable from a manufacturer's point of view, it can save lives.

It is an object of the present invention to provide a towing hook arrangement which utilizes the benefits of a ball and a socket joint while, at the same time, providing for a towing hook arrangement which enables a reliable rotation locking. The object is at least partly met by a towing hook arrangement for a vehicle. The towing hook arrangement comprises a housing and a towing hook, the towing hook having a first and a second end. The first end of the towing hook forms a ball portion of a ball and socket joint and the second end of the towing hook is connectable to a towable object. The ball and socket joint enables the towing hook to rotate about at least one axis of rotation between a first position and a second position. The ball portion of the towing hook has a point of rotation configured to be displaceable within the housing to a release position at which the towing hook can effect rotation about the at least one axis of rotation between the first position and the second position.

By enabling the point of rotation of the ball portion to be displaced to a release position, the towing hook can for example be disengaged from a lock and thus be displaced to a position at which it is permitted to rotate to e.g. a retracted position, or to any other desired position. Parts of the lock, or lock mechanism, can further be arranged as fixed members to the housing, as will be described herein, or the members can be formed by the housing itself. Optionally the lock can be formed by the housing itself.

By displacing the point of rotation of the ball portion, several different configurations and modifications providing different advantages are possible; the towing hook arrangement can be adapted to require little storage volume; it can be adapted to enable a high degree of freedom of rotation; it can be adapted to require few movable components, and it can be adapted to enable a sturdy configuration of the towing hook arrangement, for example.

The point of rotation of the ball portion of the towing hook can further be configured to be displaceable between a first position and a second position along at least one predetermined axis within the housing.

According to an aspect, the point of rotation of the ball portion can be positioned in a locked position, and thus be displaced from the locked position to the release position. When the point of rotation of the ball portion is in the locked position the ball portion is prevented from rotating about the point of rotation, optionally about one predetermined axis. The locked position can be a towing position for example. According to an aspect, when the point of rotation of the ball portion is in the release position, the ball portion can be rotated about the point of rotation, e.g. when effecting displacement substantially between a towing position and a retracted position. The release position can thus be a position in which the towing hook is adapted to be rotated towards the retracted position. The release position could alternatively be a position in which the towing hook is configured to rotate to an intermediate position between a towing position and a retracted position. Such intermediate position could be a second towing position, a temporary rest position, or optionally a position adapted for another purpose, such as maintenance for example.

According to an aspect, the ball portion of the towing hook is enabled to rotate about a first and a second axis of rotation, optionally about a first, a second and a third axis of rotation. The ball portion can further be rotated along substantially any predetermined path enabling the towing hook arrangement to fit different models or types of vehicles.

According to an aspect, the ball portion of the towing hook is prevented from rotation about the point of rotation by at least one protrusion. The point of rotation can thus be positioned in a locked position, which could be a towing position for example. The at least one protrusion thus interacts with the ball portion and provides for a lock mechanism, locking the ball portion from rotation in a predetermined direction, i.e. about a predetermined axis. The at least one protrusion can be integrally formed with the housing, or formed by a separate component with respect to the housing, such as from a component arranged on, or formed by, a push and/or pull arrangement.

According to an aspect, the ball portion of the towing hook comprises at least one corresponding groove to the at least one protrusion. In an embodiment, the number of corresponding grooves is higher than the number of protrusions, advantageously twice the number of protrusions. This enables the protrusions to lock the ball portion of the towing hook in at least two different positions.

According to an aspect, the at least one protrusion has a substantially wedge shaped form with an apex part. The apex part could be a pointy apex, a flat apex or the like, pointing towards the ball portion at least when the point of rotation of the ball portion is in the locked position. By the term apex part is hereby meant that part of the wedge shaped form which is generally opposite to a base of the wedge shaped form.

According to an aspect, the at least one protrusion has a length, and wherein the ball portion has at least one groove adapted to cooperate with the at least one protrusion to prevent the tow hook from rotation, and in that the groove has a depth, the depth of the groove being larger than the length of the at least one protrusion so that a void is formed between the at least one protrusion and at the at least one corresponding groove after they have mated. In this embodiment it is the side portions of the wedge shaped form of the at least one protrusion which act upon the ball portion of the towing hook.

According to an aspect, the housing comprises at least two protrusions interacting with at least two grooves of the ball portion of the ball and socket joint. Optionally the housing comprises at least three, four, five, six or more protrusions interacting with the ball portion of the ball and socket joint. Optionally, the ball portion of the towing hook comprises at least three, four, five, six or more grooves interacting with the protrusions of the housing, i.e. the socket joint.

According to an aspect, the ball portion is arranged in working cooperation with a push- and pull arrangement to displace the point of rotation of the ball portion to the release position. Optionally, or additionally, a first push arrangement can be adapted to displace the point of rotation of the ball portion in a first direction and a second push arrangement can be adapted to displace the point of rotation of the ball portion in a second direction. Optionally, or additionally, a first pull arrangement can be adapted to displace the point of rotation of the ball portion in a first direction and a second pull arrangement can be adapted to displace the point of rotation of the ball portion in a second direction. In the cases of two generally opposing pull/pull arrangements and push/push arrangements, the pull and push forces are balanced so that the desired displacement of the point of rotation of the ball portion of the towing hook is achieved upon actuation of the appropriate push or pull arrangement.

According to an aspect, the push- and pull arrangement comprises a push and pull member adapted to push and pull the ball portion to displace the point of rotation of the ball portion. The push and pull member at least partly encompasses the ball portion of the towing hook so as to form at least a part of the socket portion of the ball and socket joint. In this embodiment, the push and pull member can be rigidly formed in itself to form the socket portion of the ball and socket joint, or optionally form a sliding surface of the socket portion of the ball and socket joint, which is supported by the rigidity of the housing for example.

According to an aspect, the push and pull arrangement is adapted to be actuated by an electric motor, or mechanically e.g. by a biasing member. In the case of an electric motor actuation, the push and pull arrangement preferably comprises one electric motor.

According to an aspect, a part of the push and pull arrangement can extend out from the housing, i.e. the housing has an opening from which a part of the push and pull arrangement protrudes.

The push and pull arrangement can be adapted to at least partly encompass the ball portion in a gripping manner, optionally permitting the ball portion to be displaced using a pulling motion, i.e. without encompassing the ball portion, e.g. by hooking into the ball portion.

According to an aspect, the housing has at least one opening. The towing hook extends through the opening of the housing. The opening is thus configured to permit the towing hook to be displaced between the towing position and the retracted position. Optionally the opening has an extension enabling the towing hook to be rotated more than 140 degrees about at least one axis of rotation, optionally more than 160 degrees about at least one axis of rotation. Optionally, the opening has an extension enabling the towing hook to be rotated to an upside down position.

According to an aspect, the towing hook arrangement comprises a towing hook having a ball and socket joint permitting the towing hook to rotate about at least one axis of rotation when being displaced between a towing position and a retracted position. The ball portion of the towing hook has a point of rotation and the towing hook arrangement is adapted to enable the displacement of the point of rotation of the ball portion of the towing hook between a first position and a second position inside of the housing, in the mentioned case between a locked position and a release position.

The present invention also relates to a method for displacing a towing hook of a towing hook arrangement e.g. between a towing position and a retracted position. The towing hook comprises a ball portion which together with a socket portion forms a ball and socket joint enabling the towing hook to be rotated. The ball portion comprises a point of rotation. The method comprises the steps of;
- displacing the point of rotation of the ball portion of the towing hook to a release position at which the towing hook is permitted to rotate, optionally from a position at which it is prevented from rotating;
- rotating the towing hook to a selected position, and;
- optionally displacing the point of rotation of the ball portion of the towing hook to a position at which the towing hook is prevented from rotating.

Other optional method steps, alone or in suitable combinations, are;
- locking the ball portion of the towing hook from rotation in the position in which the ball portion is prevented from rotating, by mating at least one protrusion into a groove of the ball portion of the towing hook;
- rotating the towing hook to the selected position by means of an electrical motor;
- displacing the ball portion of the towing hook by displacing a push and pull arrangement, e.g. via a push and pull member.

The present invention provides for a safe towing hook arrangement, which is flexible, and requires relatively little available space on the vehicle. It is also flexible in that it enables the towing hook to be displaced between a towing position and a retracted position along a large variety of different paths, such paths can be predetermined e.g. by the use of a guiding member, or guiding means.

### BRIEF DESCRIPTION OF THE DRAWINGS

Non-limiting embodiments of the present invention will be described in greater detail with reference to the accompanying figures in which;
figure 1 shows parts of the rear of a vehicle comprising a towing hook arrangement according to an embodiment of the present invention, the towing hook being in the towing position;
figure 2 shows parts of the rear of a vehicle comprising the towing hook arrangement of figure 1, the towing hook being in the retracted position;
figure 3a shows the towing hook arrangement of figure 1 in greater detail;
figure 3b shows the towing hook arrangement of figure 1 in greater detail, the towing hook being in the retracted position;
figure 3c shows a towing hook having a ball portion for the purpose of orientation;
figure 4a shows the towing hook arrangement of figure 1 in greater detail when the towing hook is in the towing position;
figure 4b shows the towing hook arrangement of figure 1 in greater detail when the towing hook is in a release position ready to be displaced to the retracted position;
figure 5a shows the towing hook arrangement of figure 4a in greater detail and partly in cross section, when the towing hook is in the towing position;
figure 5b shows the towing hook arrangement of figure 4b in greater detail and partly in cross section when the towing hook is in a release position ready to be displaced to the retracted position;
figure 6 shows the towing hook arrangement of figure 1 in greater detail when the towing hook is in the towing position;
figure 7 shows the towing hook arrangement of figure 1 but without the housing, with the towing hook in the retracted position and;
figures 8a-8l show the towing hook and the push and pull arrangement with the towing hook in different positions and in three different views.

### DETAILED DESCRIPTION OF PREFERRED EMBODIMENTS

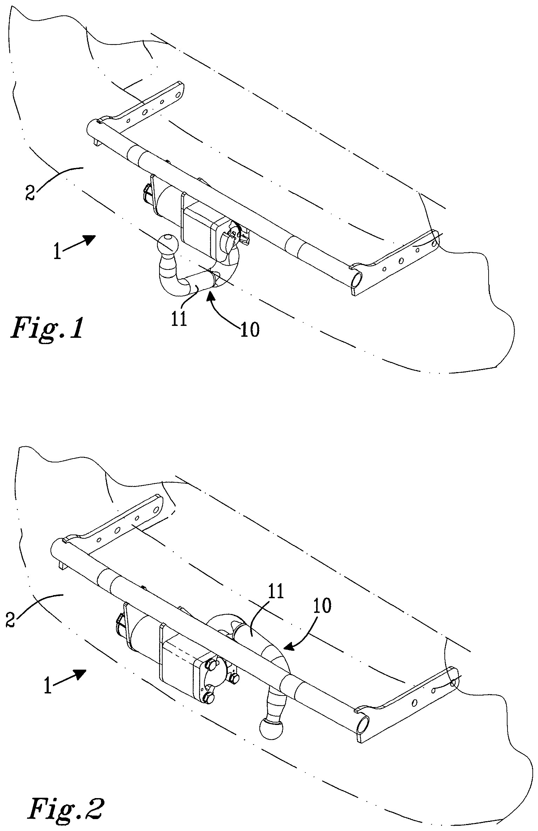

Figure 1 shows parts of a vehicle 1 and a towing hook arrangement 10 comprising a towing hook 11. The vehicle 1 is illustrated with parts of the rear of the vehicle 1 and specifically a bumper 2. For the sake of clarity, the rear of the vehicle has been illustrated with dashed lines and partly transparent. The towing hook 11, in the shown embodiment, can be displaced between a towing position, shown in figure 1, and a retracted position, shown in figure 2. In the towing position, the towing hook 11 is configured to be attached to a towable object in such a manner that the vehicle 1 can tow the towable object. In the retracted position, the towing hook 11 has been retracted to a position behind the bumper 2 of the vehicle 1 and is at least partly concealed from view by the bumper 2 of the vehicle 1. The towing hook 11 is enabled to be displaced between the towing position and the retracted position by a ball and socket joint.

The towable object could be any object which is adapted to be mounted on a towing hook, such as a trailer, a caravan, a bike carrier, a luggage carrier, or similar. The towing position is a position in which a towable object can be towed behind the vehicle and the retracted position is generally a position in which the towing hook has been displaced from the towing position, e.g. to a position behind the bumper of the vehicle.

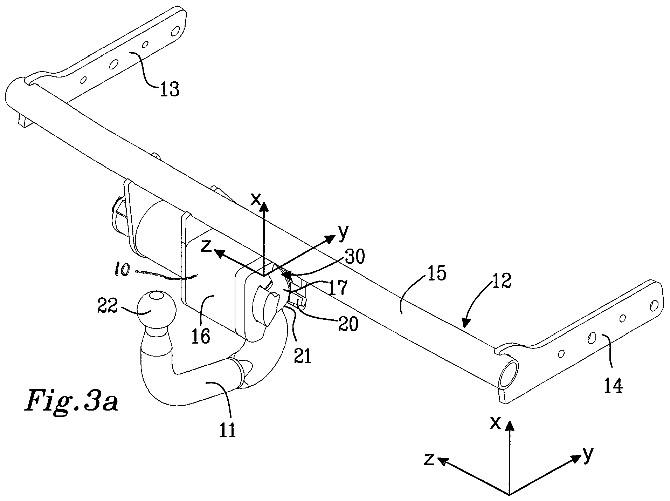

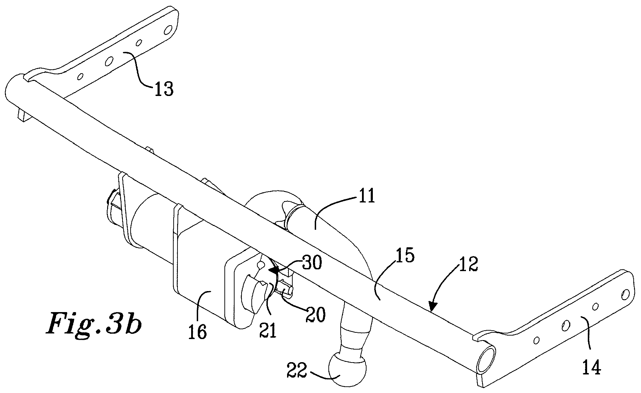

Figure 3a shows the towing hook arrangement 10 comprising an attachment arrangement 12 to attach the towing hook arrangement 10 to the vehicle. Figure 3b shows the embodiment of figure 3a but the towing hook 11 in the retracted position. The attachment arrangement 12 can be adapted to fit substantially any vehicle, in the shown embodiment, the attachment arrangement 12 is adapted to be mounted to the chassis of a car such as an SUV. The attachment arrangement 12 is formed by two mounting brackets 13, 14 and a bar 15 extending therebetween. Attached to the bar 15 of the attachment arrangement 12 is a housing 16 which is adapted to at least partly form, or to encompass, the ball and socket joint of the towing hook 11.

The towing hook 11 comprises a ball portion 20 forming a part of the ball and socket joint 30 enabling the towing hook 11 to pivot, or rotate, between different positions. As is noted, the housing 16 does not need to fully enclose the ball portion 20 of the towing hook 11. The housing 16 comprises at least one opening 17 extending through the wall of the housing 16. The opening 17 permits the towing hook 11 to extend out from the socket portion partly formed by the housing 16 and further permits it to rotate to the desired position. The housing 16 can be formed in one unitary piece of material, or be formed by distinct components attached together, as in the shown embodiment in figure 3a.

According to an aspect, the opening can be configured to permit the towing hook to be displaced between the towing position and the retracted position. Optionally the opening has an extension enabling the towing hook to be rotated more than 140 degrees, optionally more than 160 degrees about at least one axis of rotation. Optionally the opening has an extension enabling the towing hook 11 to be rotated to an upside down position, as seen in figure 2 and 3b.

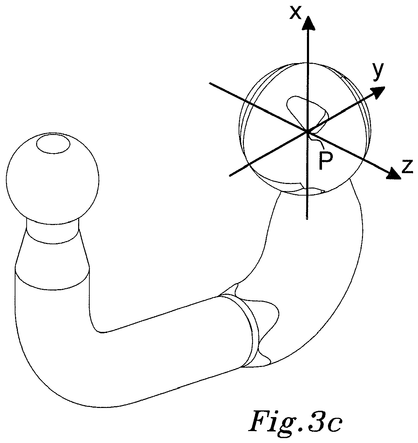

As illustrated in figure 3c, the ball portion 20 has a point of rotation P, centrally positioned in said ball portion, about which the ball portion can rotate. In the shown embodiments, the ball portion 20 has a limited number of axes of rotation about which the ball portion can rotate at one time. In the shown embodiment, the towing hook 11 is prevented from rotating freely in arbitrary directions about the point of rotation P; instead it follows a predetermined path as will be described in greater detail herein.

For the purpose of orientation, the following axes of rotation will be used herein. X axis, corresponding to the height direction of the vehicle 1, the Y axis corresponding to the longitudinal extension of the vehicle, and the Z axis, corresponding to the transverse extension of the vehicle. The extensions of the vehicle 1 are to be understood as when the vehicle 1 is in a ready to use state. In this sense the height direction of the vehicle 1 and the X axis can also be referred to as a vertical axis. The X, Y and Z axes are perpendicular to each other and intersect at an origin. As described herein, the origin is the point of rotation P. In some drawings the X, Y and Z axes are illustrated at the side of the ball portion 20 of the towing hook and the point of rotation P for the sake of clarity, however, the point of rotation P and the origin of the X, Y and Z axes are still considered to be in the center of the ball portion.

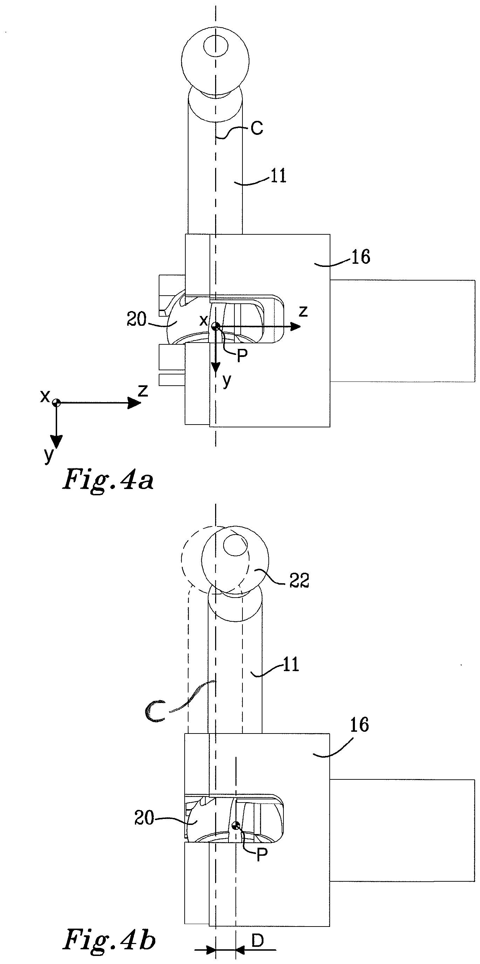

In figure 4a, it can be seen that the ball portion 20 of the towing hook 11 is only partly arranged within the periphery of the housing 16, i.e. the housing 16 does not fully encompass the ball portion 20. The housing 16, can as mentioned above, form the socket portion of the ball and socket joint 30. Optionally as shown in the embodiment in figure 3a-4b, the housing 16 forms a rigid support for a socket portion of the ball and socket joint 30. In this case, an intermediate member is present as will be described herein.

The towing hook 11 has a first and a second end 21, 22 in which the first end 21 comprises the ball portion 20 and the second end 22 is adapted to be attached to the towable object. In the shown embodiment, the second end 22 of the towing hook 11 comprises a towing ball adapted to form a ball and socket joint with the towable object, such as a socket portion on a trailer.

The ball portion 20 of the towing hook 11 can be displaced; more specifically the point of rotation P of the ball portion 20 of the towing hook 11 can be displaced. This enables the ball portion 20 to move from a locked position in which it is prevented from rotating about the point of rotation P, to a release position, at which it is permitted to rotate about the point of rotation P.

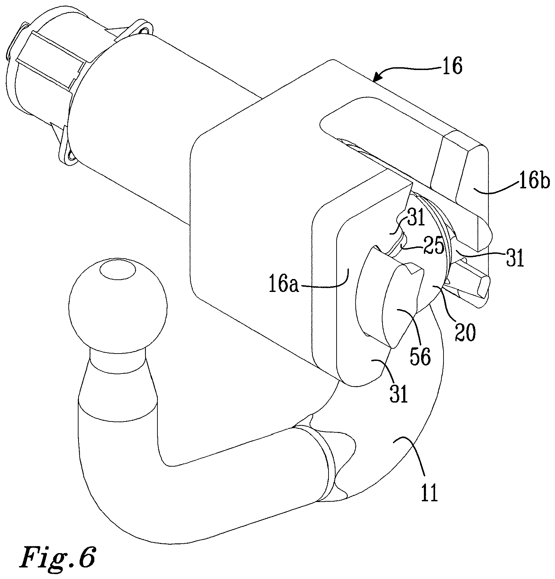

To enable the towing hook 11 to rotate with respect to the housing 16, the point of rotation P of the ball portion 20 of the towing hook 11 can be displaced with respect to the housing 16. As will be described herein, when the ball portion 20 of the towing hook 11 is displaced to the release position, a lock function is disabled. A lock mechanism can be disabled for example. In the embodiment shown in figure 6, the lock mechanism is partly formed by three protrusions 31, extending from the housing 16 towards the interior of the housing 16 and adapted to engage a groove or grooves 25 in the ball portion 20 of the towing hook 11, as will be described in greater detail herein. Although three protrusions 31 are illustrated herein; one, two, three, four, five, six or more protrusions are feasible.

Generally, it is possible that the ball portion is displaced with respect to the socket portion. Optionally or additionally, it is possible that the ball portion and the socket portion of the ball and socket joint are both displaced with respect to the housing. In both the mentioned cases, the point of rotation P of the ball portion of the towing hook is displaced.

Figures 4a-4b show the housing 16 and the towing hook 11 as seen from above with a view along the X axis. To visualize the displacement of the ball portion 20, a center line C which extends parallel with the Y-axis is shown in figures 4a and 4b. The displacement of the point of rotation P of the ball portion 20, in the shown embodiment, the whole towing hook 11, is translated along the Z axis. It should be noted that in other embodiments, the point of rotation P of the ball portion 20 of the towing hook 11 could be displaced along the X- or Y axis, or along one or more of the Z-, X-, and Y axes. As is indicated in figure 4b, the point of rotation P is displaced a distance D, which can be more than 2 mm, optionally 2-50 mm, optionally 3-40 mm, preferably 4-35 mm. The point of rotation P of the ball portion 20 of the towing hook 11 should be displaced a distance sufficient for a lock function, or lock mechanism, to be disabled, e.g. for a protrusion to disengage.

In one embodiment, the point of rotation P of the ball portion 20 is displaced while parts of the towing hook 11 are not displaced, or at least not displaced to the same extent as the ball portion 20 of the towing hook 11. The latter can be implemented by simultaneously, or substantially simultaneously, rotating the towing hook 11 while displacing the point of rotation P of the ball portion 20 of the towing hook 11. As an example with reference to figure 4b; the towing ball 22 could still be intersecting the center line C, as indicated by the dashed circle in figure 4b, while the point of rotation P has been displaced a distance D as shown in figure 4b.

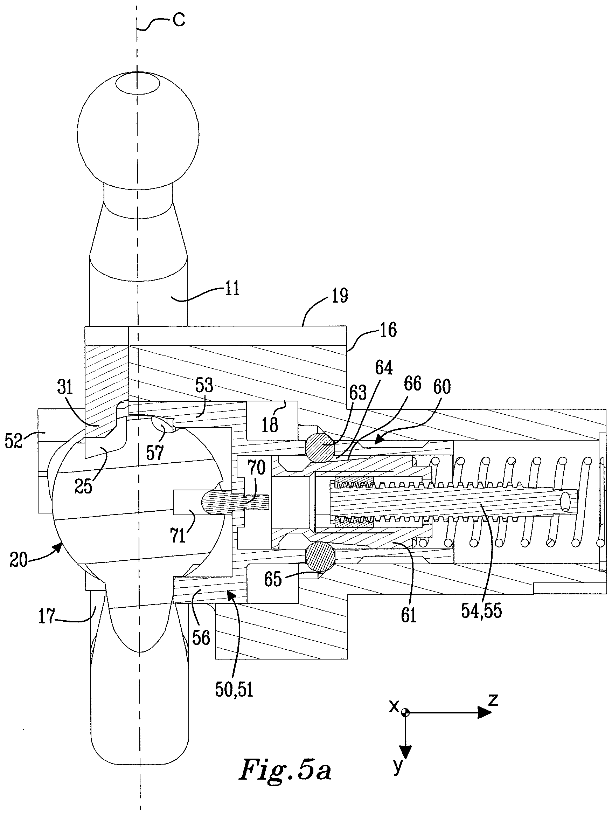

Figures 5a-5b show the embodiment of figure 4a-4b partly in cross section. Figures 5a-5b show the towing hook 11, the housing 16 and the ball portion 20 of the towing hook 11. The housing 16 has three protrusions 31 (of which substantially only one is shown in figures 5a-5b). The protrusions 31 can be integrally formed with the housing 16 or be attached as distinct components to the housing 16. Independently of how the protrusions 31 are formed, the protrusions 31 are adapted to prevent the ball portion 20 of the towing hook 11, and thus the towing hook 11 itself, from rotating in a predetermined direction. In figures 5a-5b, the protrusions 31 are specifically adapted to prevent the towing hook 11 from rotating about the Z axis. According to an aspect, parts of the housing 16 can thus be used to prevent the towing hook 11 from rotating about at least one axis when the ball portion 20 of the towing hook 11 is in the locked position, corresponding in this case to the towing position.

The housing 16 has an inner surface 18 and an outer surface 19. In figure 5a the protrusions 31 extend from the inner surface 18 in a direction towards the ball portion 20 of the towing hook 11 at least when the ball portion 20 of the towing hook 11 is positioned in the towing position as seen in figures 4a and 5a. The protrusions 31 can be different in shape and form. The protrusions 31 advantageously exhibit a wedge-shaped form with an apex part, the apex part pointing towards the ball portion 20 of the towing hook 11 as mentioned above, at least when the ball portion is locked from rotation. The wedge shaped form can be asymmetric or symmetric; it can have one tilting surface and one opposing non tilting surface, or two opposing tilting surfaces for example. The two opposing tilting surfaces can be angled with the same angle or with different angles. The protrusions 31 further can be of different shape and form with respect to each other or with respect to a group of protrusions.

The apex part can be a pointy apex, a flat apex (also sometimes referred to as a cut apex) or a less distinct apex, e.g. an apex formed by a curvature, or the like. The protrusions 31 in figure 5a extend in a direction substantially parallel with a plane formed by the X- and Y axes, to effectively prevent the towing hook 11 from rotation about the Z-axis. The protrusions 31 can thus be configured to extend in a direction substantially parallel with a first and a second axis of rotation, to effectively prevent the towing hook 11 from rotating about a third axis of rotation.

The protrusions 31 have a length, as measured from the base to the apex, or apex part. The length of the protrusions 31 is adapted to the grooves 25 of the ball portion 20 of the towing hook 11 so that the depth of the grooves 25 is larger than the length of the protrusions 31 whereby a void is formed between the protrusions 31 and the corresponding grooves 25 of the ball portion 20 after they have mated. By having such voids and wedge shaped protrusions, the tolerance of the protrusions and the grooves does not need to be as accurate. A small play is acceptable as the wedge shaped form of the protrusions will compensate for this.

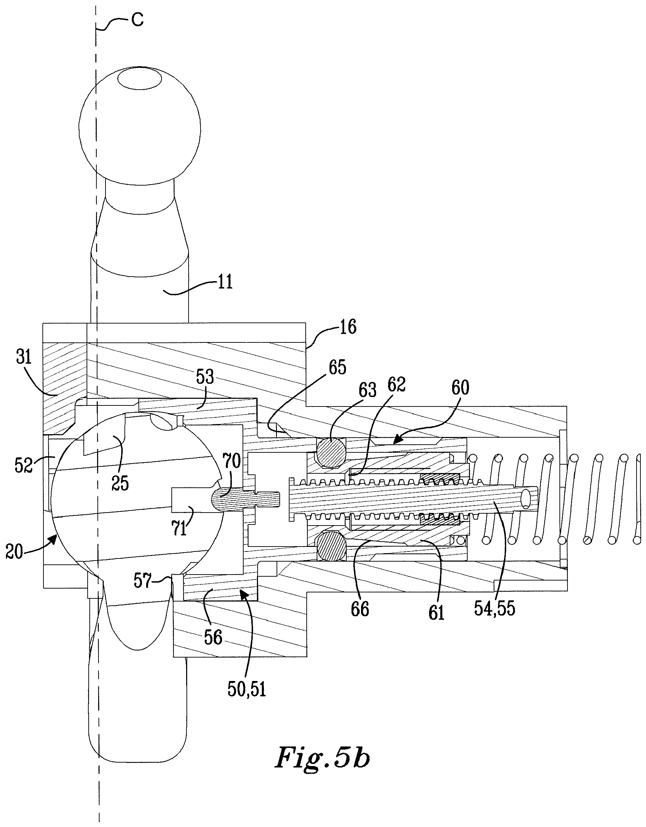

The ball portion 20 of the towing hook 11 comprises as mentioned at least one groove 25, in the shown embodiment three grooves 25, which are adapted to receive the protrusions 31 of the housing 16 in an engaging manner when the ball portion 20 of the towing hook 11 is in the locked position, e.g. a towing position. As the point of rotation P and the ball portion 20 of the towing hook 11 is displaced along the Z axis, the protrusions 31 disengage from the grooves 25 of the ball portion 20 of the towing hook 11, which is illustrated in figure 5b. The point of rotation is in its release position and the towing hook 11 is now ready to be rotated towards a retracted position, or any other desirable position.

The point of rotation of the ball portion 20 of the towing hook 11 can be displaced in different ways. One displacement mechanism 50 is shown in figures 5a-5b and will be described herein in greater detail. The displacement mechanism 50 is formed by a push and pull arrangement 51. The push and pull arrangement 51 is adapted to pull the ball portion 20 of the towing hook 11 a distance to disengage the protrusions 31 from the groove(s) 25 of the ball portion 20 of the towing hook 11, and to push it back into engagement again, for example after the ball portion 20 of the towing hook 11 has been rotated to an appropriate position, such as the retracted position, or simply to return it to the original locked position. The push and pull arrangement 51 could however be adapted to push the ball portion 20 of the towing hook 11 a distance to disengage the lock protrusions 31 from the groove 25 of the ball portion 20 of the towing hook 11, and to pull it back into engagement again, for example after the ball portion 20 of the towing hook 11 has been rotated to an appropriate position, such as the retracted position.

The push and pull arrangement 51 comprises a grip portion 52 which is adapted to interact with the ball portion 20 of the towing hook 11 to enable pulling of the ball portion 20 of the towing hook 11. In the embodiment shown in figures 5a-5b, the grip portion 52 of the push and pull arrangement 51 is configured to partly encompass the ball portion 20 of the towing hook 11 and to pull the ball portion 20 and thus displace the point of rotation P of the ball portion 20. The grip portion 52 of the push and pull arrangement 51 is arranged in working cooperation with a push portion 53. The grip portion 52 and the push portion 53 of the push and pull arrangement 51 can be formed by a unitary piece of material as shown in figures 5a-5b, or be formed by distinct components attached together. The grip portion 52 may in the following also be referred to as a pull portion.

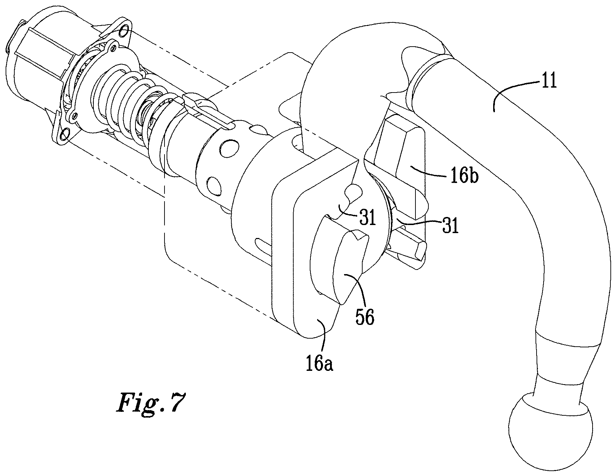

It is conceivable that the push and pull portions 52, 53 of the push and pull arrangement 51 are operated by completely separate mechanisms, i.e. operated independently with respect to each other, or as shown in figures 5a-5b operated by one main mechanism. The pull portion 52 and the push portion 53 can be formed by a single member, namely a push and pull member 56 as in the shown embodiment of figures 5a-5b. As is noticed, the push and pull member 56 extends out from the housing 16 through the opening 17 to encompass the ball portion 20 of the towing hook 11, at least when the push and pull member 56 and the towing hook 11 are in the towing position as shown in figure 5a. This can be seen more clearly in figures 6-7 which show the embodiment shown in figures 4a-5b in perspective. Visible features are indicated in figures 6 for the purpose of clarity, i.e. the housing 16, the ball portion 20 of the towing hook 11 and parts of the push and pull member 56 protruding out from the periphery of an opening in the housing 16. Figure 7 shows the embodiment of figure 6 without the housing 16. It will be noted that the protrusions 31 are attached on separate elements in the form of a first and a second side member 16a, 16b which are attached to the housing 16. In the shown embodiment, the first and the second side member 16a, 16b form parts of the housing 16 when assembled thereto. The first and the second side members 16a, 16b can be temporarily fastened to the housing or be permanently fastened, e.g. by welding.

Turning back to figures 5a-5b, the push portion 53 of the push and pull arrangement 50 can be adapted to impart a push force to the ball portion 20 of the towing hook 11 when the ball portion 20 is in the towing position. In the shown embodiment in figures 5a-5b, the push portion 53 of the push and pull arrangement 51 retains the ball portion 20 of the towing hook 11 in an engaged position with the protrusions 31 of the housing 16 by imparting a push force to the ball portion 20 of the towing hook 11.

The push and pull arrangement 51 can be electrically operated or manually operated, e.g. via a biasing member 54. In the shown embodiment, the biasing member 54 is in the form of a screw member 55. The screw member 55 is threadably engaged with the push portion 53 and actuates the translation of the pull portion 52 and the push portion 53 of the push and pull arrangement 51 upon rotation of the screw member 55. The screw member 55 can as indicated above be rotated by means of an electrical motor or manually.

A lock mechanism 60 is adapted to lock the pull and push member 56 when the ball portion 20 of the towing hook 11 is in the towing position. The lock mechanism 60 comprises a displaceable sleeve 61 comprising a number of grooves 62, each adapted to receive portions of a lock ball 63. Each lock ball 63 is positioned and held in place by a through aperture 64 in the push and pull member 56. A sloping surface 65 of the housing 16 together with a sloping surface 66 of the displaceable sleeve 61 serve as lock surfaces to brace the lock balls 63 and thus the push and pull member 56 from displacement in a lock position, as seen in figure 5a. The push and pull member 56 is configured to encompass parts of the displaceable sleeve 61 so that the through apertures 64 of the push and pull member 56 holding the lock balls 63, can cooperate with the sloping surfaces 65 of the housing 16 and the sloping surface 66 of the displaceable sleeve 61. As the displaceable sleeve 61 is displaced by means of the screw member 55, as seen in figure 5b, the lock balls 63 are pushed into the grooves 62 of the displaceable sleeve 61. The lock balls 63 pulls the push and pull member 56 together with the displaceable sleeve 61, which displaces the push and pull member 56 and thus disengages it from the ball portion 20 of the towing hook 11.

An indent 57, having a circular form extending around the periphery of the ball portion 20, cooperates with the push and pull member 56 to retain the ball portion 20 of the towing hook 11 from displacement when engaged with the push and pull member 56.

The lock mechanism 50, in this case the push and pull member 56, further comprises a lock pin 70 adapted to cooperate with a guiding groove 71 on the ball portion 20 of the towing hook 11. The lock pin 70 of the push and pull member 56 and the guiding groove 71 of the ball portion 20 enable the ball portion 20 of the towing hook 11 to follow a predetermined rotation path during the rotation between the towing position and the retracted position, or between any other desired position of the towing hook dependent on form. More importantly, the lock pin 70 and the guiding groove 71 prevent the ball portion 20 of the towing hook 11 from rotating along any arbitrary path or axis. Instead, the rotation path of the ball portion 20 of the towing hook 11 can be carefully selected to fit the available space at the rear of the vehicle. Hence, in an embodiment, the towing hook can be prevented from rotating about at least one axis of rotation by at least one protrusion. The at least one protrusion can be integrally formed with the housing, or formed by a separate component with respect to said housing, or by the push and pull member 56, or any other suitable part of the push and pull arrangement 55, such as a pin 70.

When the point of rotation P and the ball portion 20 of the towing hook 11 have been displaced so that the lock protrusions 31 have disengaged from the grooves 25 of the ball portion 20 of the towing hook 11, the ball portion 20 can be rotated about the X-, Y-, and/or Z axis.

Due to the lock pin 70 of the push and pull member 56 and the guiding groove 71 of the ball portion 20 of the towing hook 11, the ball portion 20 of the towing hook 11 can be stabilized, as shown in figure 5a. It can further be rotated along a predetermined path, and rotate about two axes only. This option is available when the push and pull member 56 has been withdrawn from engagement with the ball portion 20 of the towing hook 11 as seen in figure 5b. As is derivable from figure 5b, the lock pin 70 of the push and pull member 56 is not fully withdrawn from the groove 71 of the ball portion 20 of the towing hook 11. Instead, the lock pin 70 operates to guide the ball portion 20 during rotation along a predetermined path, and to prevent it from rotating about a third axis of rotation.

The towing hook 11 can be made in one unitary piece of material or be assembled with separate components.

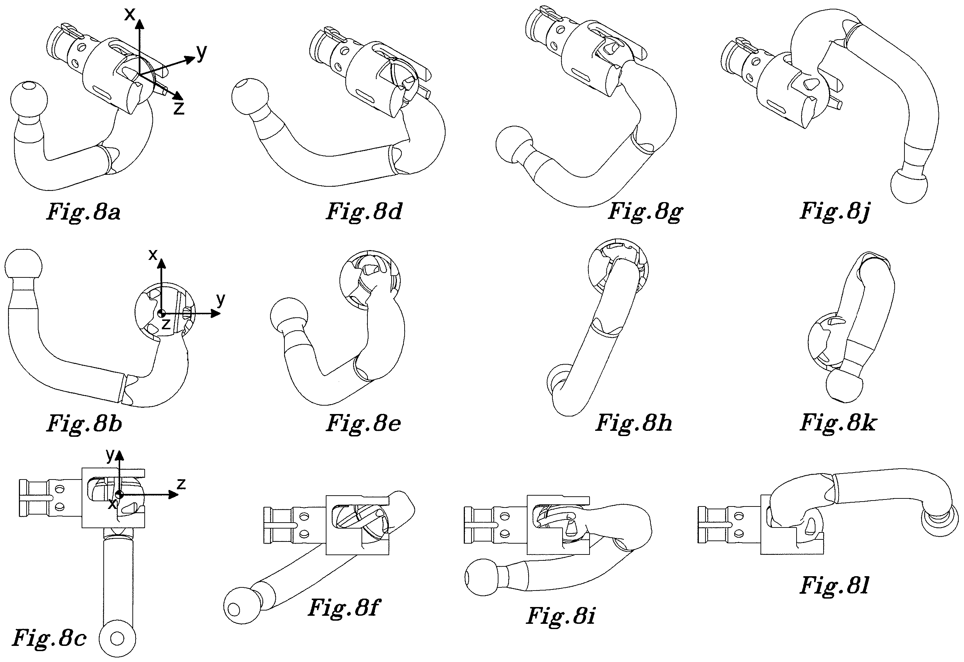

Figures 8a-8l show the push and pull member 56 and the towing hook 11 in three different perspectives; first perspective 8a, 8d, 8g, 8j, second perspective 8b, 8e, 8h, 8k and third perspective 8c, 8f, 8i, 81. The second perspective is illustrated with a view along the Z axis, and the third perspective along the X axis. Each perspective is further illustrated with the towing hook 11 in four different positions; position one; 8a; 8b; 8c; position two; 8d; 8e; 8f; position three; 8g; 8h; 8i and; position four; 8j; 8k; 81. In the first position 8a, 8b, 8c, the towing hook 11 is in the towing position, and in the fourth position 8j, 8k, 81, the towing hook 11 is in the retracted position. The second and third positions are intermediate positions which show the towing hook in two separate positions as the towing hook 11 travels between the towing position and the retracted position.

## Claims

1. A towing hook arrangement (10) for a vehicle (1), said towing hook arrangement (10) comprising a housing (16) and a towing hook (11),
said towing hook (11) having a first and a second end (21, 22), said first end (21) of said towing hook (11) forming a ball portion (20) of a ball and socket joint (30) and said second end (22) of said towing hook (11) being connectable to a towable object, said ball and socket joint (30) enabling said towing hook (11) to rotate about at least one axis of rotation (X, Y, Z) between a first position and a second position,
**characterized in that**
said ball portion (20) of said towing hook (11) has a point of rotation (P) and **in that** said point of rotation (P) is configured to be displaceable within said housing (16) to a release position at which said towing hook (11) can effect rotation about said at least one axis of rotation (X, Y, Z) between said first position and said second position.

2. The towing hook arrangement (10) according to claim 1, wherein said point of rotation (P) of said ball portion (20) is configured to be displaceable from a towing position, in which said ball portion (20) of said towing hook (11) is prevented from rotating about said point (P) of rotation.

3. The towing hook arrangement (10) according to claim 2, wherein said ball portion (20) of said towing hook (11) is prevented from rotating about said point of rotation (P), such as about one axis of rotation (Z), by at least one protrusion (31), said at least one protrusion (31) being integrally formed with said housing (16), or formed by a separate component with respect to said housing (16).

4. The towing hook arrangement (10) according to any of the preceding claims,
wherein said towing hook (11) is adapted to be rotated about at least a first and a second axis of rotation (X, Y, Z) when said point of rotation (P) is in said release position.

5. The towing hook arrangement (10) according to claim 4, wherein said ball portion (20) comprises at least one groove (25) adapted to mate with said at least one protrusion (31).

6. The towing hook arrangement (10) according to claim 5, wherein said at least one protrusion (31) has at least one surface cooperating with a surface of said at least one groove (25) to prevent said ball portion (20) of said towing hook (11) from rotation about said point of rotation (P).

7. The towing hook arrangement (10) according to claim 5 or 6, wherein said at least one protrusion (31) has a substantially wedge shaped form with an apex part.

8. The towing hook arrangement (10) according to any of claims 5-7, wherein said at least one protrusion (31) has a length, and wherein said ball portion (20) has at least one groove (25) adapted to cooperate with said at least one protrusion (31) to prevent said tow hook (11) from rotation, optionally said groove (25) has a depth, said depth of said groove (25) optionally being larger than said length of said at least one protrusion (31), so that a void is formed between said at least one protrusion (31) and at said at least one corresponding groove (25) after they have mated.

9. The towing hook arrangement (10) according to any of the preceding claims,
wherein said ball portion (20) is arranged in working cooperation with a push- and/or pull arrangement (50, 51) to displace said point of rotation (P) of said ball portion (20) of said towing hook (11) to said release position.

10. The towing hook arrangement (10) according to claim 9, wherein said push- and/or pull arrangement (50, 51) comprises a push and pull member (56), said push and pull member (56) at least partly encompassing said ball portion (20) of said towing hook (11) so as to form at least a part of a socket portion of said ball and socket joint (30).

11. The towing hook arrangement (10) according to claim 9 or 10, wherein said push- and/or pull arrangement (50, 51) is adapted to be actuated by an electrical motor, and/or mechanically, such as by a biasing member.

12. The towing hook arrangement (10) according to any of the claims 9-11, wherein a part of said push- and/or pull arrangement (50, 51) extends out from said housing (16) to at least partly encompass said ball portion (20) of said towing hook (11) in a gripping manner.

13. The towing hook arrangement (10) according to any of the preceding claims,
wherein said housing (16) has at least one opening (17), and in that said towing hook (11) extends through said opening (17) of said housing (16), wherein said opening (17) has an extension enabling said towing hook (11) to be rotated more than 140 degrees about at least one axis of rotation (Z).

14. A method for displacing a towing hook (11) of a towing hook arrangement (10), said towing hook (11) comprising a ball portion (20) which together with a socket portion (30) forms a ball and socket joint enabling said towing hook (11) to be rotated between a first position and a second position, said ball portion (20) comprising a point of rotation (P), wherein said method comprises the steps of;
- displacing said point of rotation (P) of said ball portion (20) of said towing hook (11) to a position at which said towing hook (11) is permitted to rotate;
- rotating said towing hook (11) to a selected position, and;
- optionally displacing said point of rotation (P) of said ball portion (20) of said towing hook (11) to a position at which said towing hook (11) is prevented from rotating.

15. The method according to claim 14, wherein said towing hook arrangement is a towing hook arrangement (10) according to any of the claims 1-13.

## Patentansprüche

1. Eine Zughakenanordnung (10) für ein Fahrzeug (1), wobei die Zughakenanordnung (10) ein Gehäuse (16) und einen Zughaken (11) umfasst, wobei der Zughaken (11) ein erstes und ein zweites Ende (21, 22) aufweist, wobei das erste Ende (21) des Zughakens (11) ein Kugelteil (20) von einem Kugelgelenk (30) bildet und das zweite Ende (22) des Zughakens (11) mit einem ziehbaren Objekt verbindbar ist, wobei das Kugelgelenk (30) eine Drehung des Zughakens (11) um wenigstens eine Drehachse (X, Y, Z) zwischen einer ersten Position und einer zweiten Position ermöglicht, **dadurch gekennzeichnet, dass** das Kugelteil (20) des Zughakens (11) einen Drehpunkt (P) aufweist und, dass der Drehpunkt (P) derart ausgebildet ist, sodass der Drehpunkt innerhalb des Gehäuses in einer Freigabestellung verschiebbar ist, in welcher der Zughaken (11) eine Drehung um die mindestens eine Drehachse (X, Y, Z) vornehmen kann.

2. Die Zughakenanordnung (10) nach Anspruch 1, wobei der Drehpunkt (P) des Kugelteils (20) derart ausgebildet ist, sodass er von einer Zugposition verschiebbar ist, in welcher das Kugelteil (20) des Zughakens (11) daran verhindert wird eine Drehung um den Rotationspunkt vorzunehmen.

3. Die Zughakenanordnung (10) nach Anspruch 2, wobei das Kugelteil (20) des Zughakens (11) durch wenigstens einen Vorsprung (31) daran verhindert wird sich um den Drehpunkt (P) zu drehen, sowie um eine Drehachse (Z), wobei der wenigstens eine Vorsprung (31) einteilig mit dem Gehäuse (16) gebildet ist, oder durch ein in Bezug auf das Gehäuse (16) separates Bauteil gebildet ist.

4. Die Zughakenanordnung (10) nach einem der vorstehenden Ansprüche, wobei der Zughaken (11) derart ausgebildet ist, sodass der Zughaken, wenn der Drehpunkt (P) in der Freigabestellung ist, um mindestens eine erste und eine zweite Drehachse (X, Y, Z) drehbar ist.

5. Die Zughakenanordnung (10) nach Anspruch 4, wobei der Kugelteil (20) wenigstens eine Nut (25) umfasst, welche ausgebildet ist den wenigstens einen Vorsprung (31) aufzunehmen.

6. Die Zughakenanordnung (10) nach Anspruch 5, wobei der wenigstens eine Vorsprung (31) wenigstens eine Fläche aufweist, welche mit einer Fläche der wenigstens einen Nut (25) zusammenarbeitet, sodass das Kugelteil (20) des Zughakens (11) an einer Drehung um den Drehpunkt (P) verhindert wird.

7. Die Zughakenanordnung (10) nach Anspruch 5 oder 6, wobei der wenigstens eine Vorsprung (31) eine im Wesentlichen keilförmige Form mit einem Scheitelteil aufweist.

8. Die Zughakenanordnung (10) nach einem der Ansprüche 5-7, wobei der wenigstens eine Vorsprung (31) eine Länge aufweist, und wobei das Kugelteil (20) wenigstens eine Nut (25) aufweist, welche ausgebildet ist mit dem wenigstens einen Vorsprung (31) zusammenzuarbeiten, um eine Drehung des Zughakens (11) zu verhindern, gegebenenfalls weist die Nut (25) eine Tiefe auf, wobei die Tiefe der Nut (25) gegebenenfalls größer als die Länge des wenigstens einen Vorsprungs (31) ist, sodass ein Hohlraum zwischen dem wenigstens einen Vorsprung (31) und der wenigstens einen Nut (25) gebildet ist, nachdem die Nut den Vorsprung aufgenommen hat.

9. Die Zughakenanordnung (10) nach einem der vorstehenden Ansprüche, wobei das Kugelteil (20) in funktionierende Zusammenarbeit mit einer Druck- und/oder Zuganordnung (50, 51) angeordnet ist, zum Verschieben des Drehpunkts (P) des Kugelteils (20) des Zughakens (11) in die Freigabestellung.

10. Die Zughakenanordnung (10) nach Anspruch 9, wobei die Druck- und/oder Zuganordnung (50, 51) ein Druck und Zug-Element (56) umfasst, wobei das Druck und Zug-Element (56) wenigstens teilweise das Kugelteil (20) des Zughakens (11) umschließt, sodass es wenigstens einen Teil einer Kugelpfanne des Kugelgelenks (30) bildet.

11. Die Zughakenanordnung (10) nach Anspruch 9 oder 10, wobei die Druck- und/oder Zuganordnung (50, 51) ausgebildet ist von einem elektrischen Motor und/oder mechanisch, beispielsweise durch ein Vorspannelement, betätigt zu werden.

12. Die Zughakenanordnung (10) nach einem der Ansprüche 9-11, wobei ein Teil der Druck- und/oder Zuganordnung (50, 51) sich aus dem Gehäuse (16) erstreckt, um das Kugelteil (20) des Zughakens (11) zumindest teilweise in einer greifenden Weise zu umschließen.

13. Die Zughakenanordnung (10) nach einem der vorstehenden Ansprüche, wobei das Gehäuse (16) wenigstens eine Öffnung (17) aufweist, und sich der Zughaken (11) durch die Öffnung (17) in dem Gehäuse (16) erstreckt, wobei die Öffnung (17) eine Vergrößerung aufweist, welche eine Drehung des Zughakens (11) um mehr als 140 Grad um mindestens eine Drehachse (Z) zulässt.

14. Ein Verfahren zum Verschieben eines Zughakens (11) einer Zughakenanordnung (10), wobei der Zughaken (11) ein Kugelteil (20) aufweist, welches zusammen mit einem Kugelpfannenteil (30) ein Kugelgelenk bildet, welches eine Drehung des Zughakens (11) zwischen einer ersten Position und einer zweiten Position ermöglicht, wobei das Kugelteil (20) einen Drehpunkt (P) aufweist, wobei das Verfahren die Schritte,
- Drehen des Zughakens (11) in einer ausgewählten Position, und;
- gegebenenfalls verschieben des Drehpunkts (P) des Kugelteils (20) des Zughakens (11) in einer Position in welcher der Zughaken (11) daran gehindert wird sich zu drehen,
umfasst.

15. Das Verfahren nach Anspruch 14, wobei die Zughakenanordnung eine Zughakenanordnung (10) nach einem der Ansprüche 1-13 ist.

## Revendications

1. Agencement de crochet de remorquage (10) pour un véhicule (1), ledit agencement de crochet de remorquage (10) comprenant un logement (16) et un crochet de remorquage (11),
ledit crochet de remorquage (11) ayant une première et une seconde extrémité (21, 22), ladite première extrémité (21) dudit crochet de remorquage (11) formant une portion étrier (20) d'une articulation à rotule (30) et ladite seconde extrémité (22) dudit crochet de remorquage (11) pouvant être reliée à un objet pouvant être remorqué, ladite articulation à rotule (30) permettant audit crochet de remorquage (11) de tourner autour d'au moins un axe de rotation (X, Y, Z) entre une première position et une seconde position,
**caractérisé en ce que**
ladite portion étrier (20) dudit crochet de remorquage (11) a un point de rotation (P) et **en ce que** ledit point de rotation (P) est configuré pour être déplaçable à l'intérieur dudit logement (16) jusqu'à une position de libération à laquelle ledit crochet de remorquage (11) peut effectuer une rotation autour dudit au moins un axe de rotation (X, Y, Z) entre ladite première position et ladite seconde position.

2. Agencement de crochet de remorquage (10) selon la revendication 1, dans lequel ledit point de rotation (P) de ladite portion étrier (20) est configuré pour être déplaçable d'une position de remorquage, dans laquelle ladite portion étrier (20) dudit crochet de remorquage (11) est empêchée de tourner autour dudit point de rotation (P).

3. Agencement de crochet de remorquage (10) selon la revendication 2, dans lequel ladite portion étrier (20) dudit crochet de remorquage (11) est empêchée de tourner autour dudit point de rotation (P), comme autour d'un axe de rotation (Z), par au moins une protubérance (31), ladite au moins une protubérance (31) étant formée d'un seul tenant avec ledit logement (16), ou formée par un composant distinct par rapport audit logement (16).

4. Agencement de crochet de remorquage (10) selon l'une quelconque des revendications précédentes, dans lequel ledit crochet de remorquage (11) est conçu pour être tourné autour d'au moins un premier et un second axe de rotation (X, Y, Z) lorsque ledit point de rotation (P) est dans ladite position de libération.

5. Agencement de crochet de remorquage (10) selon la revendication 4, dans lequel ladite portion étrier (20) comprend au moins une rainure (25) conçue pour s'accoupler avec ladite au moins une protubérance (31).

6. Agencement de crochet de remorquage (10) selon la revendication 5, dans lequel ladite au moins une protubérance (31) a au moins une surface coopérant avec une surface de ladite au moins une rainure (25) pour empêcher ladite portion étrier (20) dudit crochet de remorquage (11) de tourner autour dudit point de rotation (P).

7. Agencement de crochet de remorquage (10) selon la revendication 5 ou 6, dans lequel ladite au moins une protubérance (31) a sensiblement une forme de coin mise en forme avec une partie apex.

8. Agencement de crochet de remorquage (10) selon l'une quelconque des revendications 5 à 7, dans lequel ladite au moins une protubérance (31) a une certaine longueur, et dans lequel ladite portion étrier (20) a au moins une rainure (25) conçue pour coopérer avec ladite au moins une protubérance (31) pour empêcher ledit crochet de remorquage (11) de tourner, de manière facultative ladite rainure (25) a une certaine profondeur, ladite profondeur de rainure (25) étant de manière facultative plus grande que ladite longueur de ladite au moins une protubérance (31), de sorte qu'un vide est formé entre ladite au moins une protubérance (31) et ladite au moins une rainure correspondante (25) après leur accouplement.

9. Agencement de crochet de remorquage (10) selon l'une quelconque des revendications précédentes, dans lequel ladite portion étrier (20) est agencée en coopération de travail avec un agencement de poussée et/ou traction (50, 51) pour déplacer ledit point de rotation (P) de ladite portion étrier (20) dudit crochet de remorquage (11) jusqu'à ladite position de libération.

10. Agencement de crochet de remorquage (10) selon la revendication 9, dans lequel ledit agencement de poussée et/ou traction (50, 51) comprend un élément de poussée et de traction (56), ledit élément de poussée et de traction (56) englobant au moins partiellement ladite portion étrier (20) dudit crochet de remorquage (11) de façon à former au moins une partie d'une portion douille de ladite articulation à rotule (30).

11. Agencement de crochet de remorquage (10) selon la revendication 9 ou 10, dans lequel ledit agencement de poussée et/ou de traction (50, 51) est conçu pour être actionné par un moteur électrique, et/ou mécaniquement, comme par un élément de sollicitation.

12. Agencement de crochet de remorquage (10) selon l'une quelconque des revendications 9 à 11, dans lequel une partie dudit agencement de poussée et/ou de traction (50, 51) s'étend hors dudit logement (16) pour englober au moins partiellement ladite portion étrier (20) dudit crochet de remorquage (11) par agrippement.

13. Agencement de crochet de remorquage (10) selon l'une quelconque des revendications précédentes, dans lequel ledit logement (16) a au moins une ouverture (17), et en ce que ledit crochet de remorquage (11) s'étend à travers ladite ouverture (17) dudit logement (16), dans lequel ladite ouverture (17) a une extension permettant audit crochet de remorquage (11) d'être tourné sur plus de 140 degrés autour d'au moins un axe de rotation (Z).

14. Procédé pour déplacer un crochet de remorquage (11) d'un agencement de crochet de remorquage (10), ledit crochet de remorquage (11) comprenant une portion étrier (20) qui en même temps qu'une portion douille (30) forme une articulation à rotule permettant audit crochet de remorquage (11) d'être tourné entre une première position et une seconde position, ladite portion étrier (20) comprenant un point de rotation (P), dans lequel ledit procédé comprend les étapes de :
- déplacement dudit point de rotation (P) de ladite portion étrier (20) dudit crochet de remorquage (11) jusqu'à une position à laquelle ledit crochet de remorquage (11) est autorisé à tourner ;
- rotation dudit crochet de remorquage (11) jusqu'à une position sélectionnée ; et
- de manière facultative déplacement dudit point de rotation (P) de ladite portion étrier (20) dudit crochet de remorquage (11) jusqu'à une position à laquelle ledit crochet de remorquage (11) est empêché de tourner.

15. Procédé selon la revendication 14, dans lequel ledit agencement de crochet de remorquage est un agencement de crochet de remorquage (10) selon l'une quelconque des revendications 1 à 13.
